# EUROPÄISCHE PATENTSCHRIFT

(11) **EP 3 270 758 B1**
(45) Veröffentlichungstag und Bekanntmachung des Hinweises auf die Patenterteilung: **27.11.2019**
(21) Anmeldenummer: 16711986.6
(22) Anmeldetag: 03.03.2016
(51) Int. Cl.: A47L 13/40

(54) **ADSORPTION VON PARTIKELN AN SILICONPOLYMER ENTHALTENDEM MATERIAL**
ADSORPTION OF PARTICLES ON A MATERIAL CONTAINING A SILICON POLYMER
ADSORPTION DE PARTICULES AU NIVEAU D'UN MATÉRIAU CONTENANT DU POLYMÈRE DE SILICONE

(30) Priorität: 16.03.2015 DE 102015204708
(43) Veröffentlichungstag der Anmeldung: 24.01.2018
(73) Patentinhaber: Wacker Chemie AG, 81737 München (DE)
(72) Erfinder: ACHENBACH, Frank, 84359 Simbach (DE)
(74) Vertreter: Fritz, Helmut
(86) Internationale Anmeldenummer: PCT/EP2016/054492
(87) Internationale Veröffentlichungsnummer: WO 2016/146392

(56) Entgegenhaltungen:
- WO-A2-02/45564
- US-A1- 2012 097 035

## Beschreibung

Die Erfindung betrifft ein Verfahren zur Adsorption von Partikeln durch triboelektrische Aufladung an einem Siliconpolymer enthaltenden Material M und ein Material M, enthaltendes Reinigungsgerät.

Eine gründliche Gebäudereinigung stellt in ästhetischer wie hygienisch-gesundheitlicher Hinsicht eine wichtige und anspruchsvolle Aufgabe dar. Dabei ist die Beseitigung von Hausstaub aufgrund der permanenten Entstehung und flächendeckenden Verteilung besonders herausfordernd. Hausstaub besteht aus vielfältigen organischen und anorganischen Partikeln, Fasern und Stoffen, die ihren Ursprung in Tieren (Haustiere, Milben), Pflanzen (Pollen, Samen), Menschen (Hautschuppen, Haare), Sand, Schimmelpilzen, Bakterien, Viren, Haushaltschemikalien (Weichmacher) etc. haben, und somit gesundheitliche Schäden (z.B. Allergien) verursachen kann.

Für die Aufnahme und Beseitigung loser Schmutzpartikel im Haushaltsbereich stehen vielfältige Reinigungsmittel, -geräte und -utensilien zur Verfügung. Grundsätzlich lassen sich trockene und nass-feuchte Reinigungsverfahren unterscheiden. Für die trockene Säuberung großer, frei zugänglicher Oberflächen können z.B. Staubsauger eingesetzt werden. Für die trockene Säuberung kleinerer, insbesondere krummliniger, schlecht zugänglicher harter Oberflächen (Möbel, Stehlampen, Bilder, Fernseher, Heizungskörper, Dekorationsgegenstände etc.) hat sich die Verwendung diverser Staubtücher, Staubwedel, Besen, Handfeger, Wischer, Bürsten, Mopps, Swiffer® -Produkte etc. bewährt, deren Funktionsweise im Wesentlichen auf einer losen Adsorption der Schmutzpartikel auf dem Gewebe bzw. den Fasern oder Borsten des Reinigungsgerätes beruht. Für die trockene Reinigung weicher Oberflächen, insbesondere Textilien, können beispielsweise Bürsten und Fusselroller eingesetzt werden.

Den auf trockener Physisorption der Schmutzpartikel basierenden Reinigungsgeräten ist gemeinsam, dass deren Effektivität vornehmlich von zwei Faktoren bestimmt wird. Erstens von der Größe der die Schmutzpartikel aufnehmenden Oberfläche des Reinigungsgerätes und zweitens von der Stärke der zwischen Schmutzpartikel und selbiger Oberfläche wirkenden Adsorptionskräfte. Die wirksame Oberfläche des Reinigungsgerätes lässt sich beispielsweise durch Verwendung spezieller Gewebestrukturen, sehr dünner Fasern und Borsten (z.B. mit geschlitztem Ende oder gesplissen) erheblich vergrößern, was z.B. in Mikrofasertüchern, Staubwedeln, Staubwischern etc. ausgenutzt wird. Der Erhöhung der Adsorptionskräfte des Reinigungsgerätes kommt besondere Bedeutung zu. Sind die Adsorptionskräfte zu gering, können die Schmutzpartikel vom Reinigungsgerät nur unzureichend gebunden werden, was zur Folge hat, dass diese nur von einem Ort zum anderen verteilt, nicht aber beseitigt werden. Eine Erhöhung der Adsorptionskräfte kann durch eine stärkere Klebrigkeit der Oberfläche realisiert werden (wie beispielsweise beschrieben in WO 2005/011457 A2). Um einen direkten Kontakt der klebrigen Oberfläche z.B. eines Fusselrollers mit dem zu reinigenden Substrat zu vermeiden, können die von einer ersten nichtklebrigen Rolle aufgenommenen und adsorbierten Schmutzpartikel auf eine zweite klebrige Rolle übertragen werden, wie beispielsweise in WO 2012/025900 und DE 20 2005 018 972 U1 beschrieben. Diese Methode hat jedoch den Nachteil, dass eine einfache Säuberung des Reinigungsgerätes durch bloßes Ausschütteln, Ausschlagen oder Abstreifen nun nicht mehr möglich ist und die mit Schmutzpartikeln gesättigte Oberfläche (z.B. eines Rollers) entsorgt werden muss. Zudem kann eine klebrige Oberfläche auch den zu reinigenden Gegenstand kontaminieren oder beschädigen. Schließlich versagt diese Methode bei gewebeartigen, Faser- oder Borsten-basierten Reinigungsgeräten, da die Fasern untereinander verkleben und der hohe Gleitreibungskoeffizient des Reinigungsgerätes ein Gleiten auf dem zu reinigenden Gegenstand unmöglich macht.

Eine weitere Möglichkeit zur Erhöhung der Adsorptivität besteht in einer Imprägnierung oder Beschichtung der Fasern des Reinigungsgerätes, wofür Öle, Pflanzenwachse, Olivenblattextrakte etc. verwendet werden. Diese Teile müssen in der Regel nach Gebrauch weggeworfen werden.

Eine weitere wichtige Möglichkeit zur Erhöhung der Adsorptionskräfte besteht darin, die Schmutzteilchen elektrostatisch an eine Oberfläche des Reinigungsgerätes zu binden. Die elektrostatische Wechselwirkung zwischen Schmutzpartikeln und Reinigungsgerät stellt einen universellen Vorgang dar, der durch Reibung bzw. Kontakt unterschiedlicher Materialien stets hervorgerufen wird. Dieser auch als triboelektrische Aufladung bezeichnete Effekt tritt je nach Materialkombination, Reibungs- bzw. Kontaktintensität, Luftfeuchtigkeit, Temperatur etc. in unterschiedlich starkem Maße in Erscheinung. Während sich z.B. Lammwolle oder Straußenfedern infolge Reibung kaum elektrostatisch aufladen, erfährt ein Polyurethanschaum eine starke positive, eine Teflon® Oberfläche eine stark negative elektrostatische Aufladung. Eine genauere Betrachtung zeigt, dass unterschiedliche Materialien im Allgemeinen auch ein unterschiedliches elektrochemisches Potenzial besitzen, was zur Folge hat, dass beim Reibungsvorgang oder auch bloßem Kontakt zweier Materialien Elektronen von dem Material mit dem höheren elektrochemischen Potenzial auf das Material mit dem niedrigeren elektrochemischen Potenzial übertragen werden, wodurch ersteres eine positive, letzteres eine negative elektrostatische Aufladung erfährt. Da die hier betrachteten auf trockener Reinigung basierenden Reinigungsgeräte beim Reinigungsvorgang in intensiven (Reibungs)Kontakt mit dem zu reinigenden Gegenstand geraten, kann man davon ausgehen, dass triboelektrische Effekte nicht unwesentlich zur Adsorptionsstärke des Reinigungsgerätes beitragen, zumal es sich bei den Reinigungsgeräten meist um Kunststoffmaterialien, also elektrische Isolatoren, handelt. Die infolge Reibung oder Kontakt elektrostatisch aufgeladene Oberfläche des Reinigungsgerätes vermag nicht nur gegensätzlich geladene Schmutzpartikel anzuziehen, sondern auch polare oder durch Induktion polarisierte Schmutzpartikel, die selbst über keine Nettoladung verfügen.

Es sind zahlreiche Reinigungsgeräte bekannt, die gezielt eine elektrostatische Aufladung nutzen, um deren Effektivität zu erhöhen. Beispielsweise beschreibt EP 1 757 369 A2 ein Reinigungsgerät mit einem staubbindenden Roller, der bei Rotation durch ein Reibungspolster elektrostatisch aufgeladen wird. US 4490870 A beschreibt ein Zweiroller-Reinigungsgerät, dessen Reinigungsrolle bestehend aus einem Kern aus Naturkautschuk der mit einem mechanisch elektrostatisch aufladbaren Siliconelastomer beschichtet ist, welches eine weiche, leicht klebrige Oberfläche besitzt. Die infolge der Klebrigkeit und elektrostatischen Aufladung auf dem Siliconelastomer gebundenen Schmutzpartikel können auf eine zweite Rolle mit einer Oberfläche aus druckempfindlichem Kleber übertragen und fixiert werden. Als nachteilig erweist sich hier die Schwierigkeit, einen festen Verbund zwischen Naturkautschuk und Siliconelastomer zu erzeugen. Die Erzeugung einer elektrostatisch gut aufladbaren Oberflächenschicht aus Siliconelastomer ist zudem bei Reinigungstextilien sowie anderen Faser-basierten Reinigungsgeräten praktisch nicht realisierbar.

Es bestand daher die Aufgabe, ein einfaches Verfahren zu entwickeln, welches es erlaubt, die Effektivität von auf trockener Physisorption beruhender Reinigungsgeräte zu erhöhen, ohne deren spezifische Funktionalität (Gebrauchstauglichkeit) nachteilig zu verändern. Diese Aufgabe wird durch das erfindungsgemäße Verfahren gelöst.

US-A-20120097035 offenbart ein Verfahren zur Adsorption von Partikeln durch triboelektrische Aufladung, bei dem die Partikel an einem Material adsorbiert werden, das organischen polymeren Stoff mit darin fein verteiltem Siliconpolymer enthält.

Gegenstand der Erfindung ist ein Verfahren zur Adsorption von Partikeln durch triboelektrische Aufladung, bei dem die Partikel an einem Material M adsorbiert werden, das organischen polymeren Stoff mit darin fein verteiltem Siliconpolymer enthält, wobei der Gehalt an Siliconpolymer im Material M mindestens 0,0001 Gew.-% und kleiner 10 Gew.-% beträgt und wobei als Siliconpolymer UHMW-Polysiloxan (ultra-high molecular weight) mit einer dynamischen Viskosität von 1 kPa.s bis 50 kPa.s bei 25 °C eingesetzt wird.

Werden zwei unterschiedliche Materialien miteinander gerieben oder nach dem Zusammendrücken getrennt, erfolgt eine elektrostatische Aufladung, wobei eines der Materialien negativ, das andere positiv geladen wird. Unterschiedliche Materialien weisen eine unterschiedliche Elektronenaffinität auf, weswegen das Material mit der höheren Elektronenaffinität eine negative Aufladung erfährt, jenes mit niedrigerer Elektronenaffinität eine positive. Zudem stellt man beim Reiben zweier Materialien fest, dass die Stärke der Aufladung, also die übertragene Ladungsmenge, je nach Materialkombination unterschiedlich ist. Entsprechend der Stärke sowie des Vorzeichens (positiv oder negativ) der Aufladung bei einem Reibungsvorgang lassen sich die Materialien in der sogenannten triboelektrischen Reihe anordnen. Die Materialien mit der stärksten Tendenz einer positiven Aufladung bilden das positive Ende der Reihe, jene mit der stärksten Tendenz einer negativen Aufladung bilden das negative Ende. Materialien, welche eine sehr geringe bis gar keine triboelektrische Aufladungstendenz zeigen, befinden sich folglich im mittleren Teil dieser Reihe. Die Stärke der Tendenz zur positiven oder negativen Aufladung eines Materials kann durch die pro Joule Reibungsenergie auf das Material unter definierten Bedingungen übertragene positive oder negative Ladungsmenge (in Coulomb) gemessen und somit quantifiziert werden (in Coulomb/Joule). Je größer die Differenz der Aufladungstendenzen zweier Materialien ist (also je weiter diese in der triboelektrischen Reihe auseinander stehen), desto stärker wird die triboelektrische Aufladung beim Reibungsvorgang erfolgen.

Siliconpolymere gehören zu den Materialien mit der höchsten negativen Aufladungstendenz. Sie befinden sich somit am negativen Ende der triboelektrischen Reihe. Wird daher ein Siliconpolymer mit einem anderen Material gerieben, lädt sich das Siliconpolymer stets negativ auf, das andere Material positiv, und zwar umso stärker, je weiter entfernt sich das andere Material in der triboelektrischen Reihe vom Siliconpolymer befindet. Bei der Verwendung der Siliconpolymere zur Adsorption von Partikeln in Reinigungsgeräten steht jedoch einerseits der vergleichsweise hohe Preis der Siliconelastomerzusammensetzungen entgegen. Zum anderen wäre die Herstellung textiler Gewebe und Fasern aus Siliconpolymer extrem aufwändig und damit teuer. Schließlich sind die mechanischen Eigenschaften und Reibungseigenschaften von Siliconpolymer für die Funktionalität von Reinigungsgeräten ungeeignet.

Überraschend wurde festgestellt, dass die triboelektrische Aufladungstendenz organischer polymerer Stoffe durch geringste Gehalte an Siliconpolymeren nahezu auf das Niveau eines reinen Siliconpolymeren angehoben werden kann, ohne die sonstigen Gebrauchseigenschaften des organischen polymeren Stoffs zu beeinträchtigen. Deshalb wurde das Material M hergestellt. Insbesondere die erfindungsgemäßen, aus Material M enthaltenden Reinigungsgeräte weisen infolge ihrer siliconartigen triboelektrischen Eigenschaften eine hervorragende Schmutzaufnahme und -bindung auf. Die Herstellung der Reinigungsgeräte auf der Basis von Material M kann gemäß der herkömmlichen Verfahren erfolgen.

Das Verfahren zur Adsorption von Partikeln kann bei der Abtrennung oder Auftrennung von Partikeln in technischen Prozessen, wie Filterung oder Siebung eingesetzt werden. Ebenso kann das Verfahren zur Adsorption von Partikeln bei der Reinigung zur trockenen Reinigung von Oberflächen eingesetzt werden.

Vorzugsweise wird bei dem Verfahren ein Reinigungsgerät eingesetzt, das üblicherweise zur trockenen Reinigung eingesetzt wird, beispielsweise Staubsauger, Staubsaugerbeutel, Besen, Bürsten, Wischer, Tücher, Schwämme, Wedel, Mopps, Abzugshaubenfilter, Pollenfilter und Fliegengitter in allen speziellen Ausführungsformen. Der für die Adsorption wichtige Teil des Reinigungsgerätes ist jene Vorrichtung, die den Schmutz unmittelbar aufnimmt, bindet, weiterleitet oder sammelt. Dies sind typischerweise Borsten, (Micro)Fasern, Gewebe, Vliese, Filze etc. Es kann sich dabei aber auch um weiche Walzen, Schwämme/Schäume, Noppen, Kämme etc. handeln.

Die den Schmutz adsorbierenden Teile des Reinigungsgerätes bestehen vorzugsweise aus dem Material M.

Der organische polymere Stoff kann organischer Kunststoff sein, wie beispielsweise Polyolefine (Polypropylen, HD-, LD-Polyethylen), Polyester (Polybutylenterephthalat, Polyethylenterephthalat), Polyamide (Polyamid 6, Polyamid 6.6), Polyimid, Polyamidimid, Polyphenylensulfid, Aramid, Polyacrylnitril, Polyacrylnitril-Polymethacrylat-Copolymer, Polyacrylnitril-Polyvinylchlorid-Copolymer, Polyvinylchlorid, Polytetrafluorethylen und Polyurethan. Auch kann der organische polymere Stoff ein Polymer natürlichen Ursprungs sein, wie Zellulose (Viskose), Naturkautschuk (Gummi), Polylactid und Chitosan. Im Zuge der verstärkten Betrachtung von Nachhaltigkeitsaspekten kommen auch Pflanzenfasern, wie Baumwolle, Bambus, Hanf, Jute, Flachs, Sisal, Arenga etc. sowie Fasern tierischen Ursprungs, wie Schafwolle, Ziegen-, Rinder- und Rosshaar, Zuchtseide, Straußenfedern etc. zur Anwendung.

Zusätzlich können im Material M vorzugsweise zur Verbesserung der mechanischen Eigenschaften auch anorganische Materialien, vorzugsweise Füllstoffe und Fasern, wie Glasfasern, Kohlenstofffasern, Keramikfasern oder Metalle, insbesondere Metallfäden oder Drähte eingesetzt werden. Alle diese Materialien M können, gegebenenfalls in Kombination wie in Mischgeweben realisiert, zu schmutzaufnehmenden Teilen von Reinigungsgeräten weiterverarbeitet werden.

Die nicht erfindungsgemässe Imprägnierung oder Beschichtung eines Materials mit Siliconpolymer hat den Nachteil, dass relativ dünnflüssige, gut spreitende Silicone verwendet werden müssen, die auf der Oberfläche des Reinigungsmaterials nur physisorbiert vorliegen und deshalb bei Kontakt mit der zu reinigenden Oberfläche auf diese übertragen werden. Die dadurch mit Silicon kontaminierten Flächen zeigen eine verstärkte elektrostatische Aufladung, was infolge der stets vorhandenen Luftzirkulation (Konvektion) zu einer verstärkten Schmutzanziehung und Schmutzbindung, ergo zu einer verstärkten Verschmutzung, führt.

Auch das Beschichten mit einer vernetzbaren Siliconmasse erweist sich als nicht zielführend, weil Siliconelastomerartige Oberflächen schlechte Reibungseigenschaften (hoher Gleitreibungskoeffizient) aufweisen.

Das Material M enthält fein verteiltes Siliconpolymer, das besonders bevorzugt homogen oder vorzugsweise zumindest gut dispergiert im Material M vorliegt.

Unter einer homogenen Verteilung des Siliconpolymeren im Material M wird dabei vorzugsweise eine durchschnittliche Teilchengröße der Siliconpolymerteilchen von kleiner 0,010 µm verstanden, wobei die durchschnittliche Teilchengröße D nach der Gleichung D = ∑nᵢDᵢ/∑nᵢ berechnet wird und die Teilchendurchmesser Dᵢ von 500 Siliconpolymerteilchen mittels Transmissionselektronenmikroskopie (TEM) eines Mikrotomschnittes (Ultradünnschnitt) des Materials M bestimmt werden; nᵢ gibt die Anzahl der Siliconpolymerteilchen mit dem Durchmesser Dᵢ an, es gilt ∑nᵢ =500. Die Teilchengrößeverteilung wird durch Auswertung einer Serie von TEM-Bildern ermittelt, was manuell auf dem grafischen Tablett erfolgt. Für Siliconpolymerteilchen die im TEM-Bild keine kreisförmige, sondern annähernd elliptische Gestalt aufweisen, errechnet sich der Durchmesser Dᵢ des i-ten Teilchens nach der Gleichung Dᵢ=(Di_{H}+Di_{N})/2, wobei D_{iH} die Länge der Hauptachse und D_{iN} die Länge der Nebenachse der Ellipse bezeichnet. Die TEM-Bestimmung der durchschnittlichen Teilchengröße kann mit dem Transmissionselektronenmikroskop der Fa. Carl Zeiss AG, LIBRA 120, im TEM-Modus (bright field) bei einer Beschleunigungsspannung von 120 kV erfolgen.

Unter einer guten Dispergiergüte des Siliconpolymeren im Material M wird vorzugsweise eine durchschnittliche Teilchengröße des Siliconpolymeren von maximal 10 pm, vorzugsweise weniger als 2 µm und besonders bevorzugt weniger als 0,500 µm verstanden, jeweils nach der o.g. Methode bestimmt.

Als Siliconpolymere kommen grundsätzlich alle dem Fachmann unter dem Begriff Siliconpolymer bekannten siliciumorganischen Verbindungen in Frage. Eine geeignete Definition des Siliconpolymeren findet sich in Winnacker/Küchler: "Chemische Technik", R. Dittmeyer, W. Keim, G. Kreysa, A. Oberholz (Hrsg.), Band 5: "Organische Zwischenverbindungen, Polymere", Kapitel: "Silicone", Wiley-VCH, Weinheim, 2005.

Dabei kann es sich um substituierte oder unsubstituierte lineare Oligo- oder Polydiorganosiloxane, verzweigte Siliconpolymere, Siliconharze oder vernetzte Siliconpolymere handeln. Selbstverständlich können auch Mischungen bestehend aus verschiedenen Siliconpolymeren eingesetzt werden. Wie bereits ausgeführt, können auch siliconhaltige Copolymere verwendet werden, beispielsweise polyetherfunktionelle Silicone, Harnstoff- oder Urethaneinheiten enthaltene Silicone oder Siliconblockcopolymere mit organischen Polymeren. Besonders bevorzugt ist die Verwendung hochmolekularer Polydiorganosiloxane, die zum Zwecke der besseren Additivierbarkeit weitere, auch Nichtsiliconbestandteile enthalten können, z.B. Füllstoffe wie feinteilige Kieselsäuren, Kreiden, Talk und Schichtsilikate.

Vorzugsweise entspricht das Siliconpolymer der allgemeinen Formel (1)

[**R**₃**S**i**O**_{1/2}]ₐ[**SiR**₂**O**_{2/2}]_{b}[**RSi**O_{3/2}]_{c}[**SiO**_{4/2}]_{d}, (1),

wobei
**R** Wasserstoff, -OH oder einen unsubstituierten oder substituierten C₁-C₁₈-Kohlenwasserstoffrest und
**a, b, c, d** jeweils 0 oder eine ganze Zahl bedeuten und
**a + b + c + d** eine ganze Zahl von 5 - 10000 ist.

Beispiele für C₁-C₁₈-Kohlenwasserstoffreste **R** sind Alkylreste wie der Methyl-, Ethyl-, n-Propyl-, iso-Propyl-, n-Butyl-, 2-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, 4-Ethylcyclohexyl-, Cycloheptylreste, Norbornylreste und Methylcyclohexylreste. Bevorzugt sind unter den Alkylresten die C₁-C₆-Alkylreste wie der Methyl- und der Ethylrest, insbesondere der Methylrest.

Beispiele für **R** sind auch ungesättigte C₁-C₁₈-Kohlenwasserstoffreste, beispielsweise Alkenylreste, wie der Vinyl-, 2-Propen-2-yl-, Allyl-, 3-Buten-1-yl-, 5-Hexen-1-yl-, 10-Undecen-1-yl, Cycloalkenylreste (2-Cyclohexenyl-, 3-Cyclohexenyl-, Cyclopentadienylrest, 2-(Cyclohex-3-en-1-yl)ethyl; Arylreste, wie der Phenyl-, Biphenylyl-, Naphthylrest; Alkarylreste, wie o-, m-, p-Tolylreste und Phenethylreste (2-Phenylethyl-, 1-Phenylethylrest) und Aralkylreste, wie der Benzylrest. Bevorzugte ungesättigte C₁-C₁₈-Kohlenwasserstoffreste **R** sind Vinyl- und Phenylrest.

Beispiele für substituierte Kohlenwasserstoffreste als Reste **R** sind halogenierte Kohlenwasserstoffe, wie der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.

Die Reste **R** sind vorzugsweise über eine Si-C-Bindung mit dem Siliconpolymer (1) verknüpft, können jedoch auch über ein Sauerstoffatom -O- an das Siliconpolymer gebunden sein.

**R** weist vorzugsweise 1 bis 6 Kohlenstoffatome auf. Insbesondere bevorzugt sind Ethyl- Phenyl-, Vinyl- und Methylreste.

Vorzugsweise bedeutet **a + b + c + d** eine Zahl von mindestens 10, besonders bevorzugt mindestens 100, insbesondere mindestens 1000 und maximal 15000, besonders bevorzugt maximal 10000, insbesondere maximal 7000.

Vorzugsweise bedeutet **c** + **d** < 0,1 x (**a** + **b** + **c + d**), insbesondere **c** + **d** < 0,05 x (**a** + **b** + **c** + **d**).

Vorzugsweise bedeuten mindestens 50%, besonders bevorzugt mindestens 70%, insbesondere mindestens 80% aller Reste **R** einen Methylrest.

Grundsätzlich können alle der Formel (1) entsprechenden Siliconpolymere eingesetzt werden, bevorzugt sind jedoch Siliconpolymere mit einer dynamischen Viskosität von größer 1000 mPa.s, vorzugsweise gemessen nach DIN EN ISO 3219: 1994 und DIN 53019 mit einem Rheometer "MCR 302" der Fa. Anton Paar, wobei ein Platte-Kegel-System (Kegel CP50-2) mit einem Öffnungswinkel von 2°, Durchmesser 50mm verwendet wird, die Messtemperatur 25,00°C +/- 0,05°C und die Schergeschwindigkeit 1 sec⁻¹ beträgt.

Aufgrund der Unverträglichkeit/Nichtmischbarkeit von Siliconpolymeren und den meisten organischen Polymeren ist es bevorzugt, ein Ausschwitzen/Ausbluten des Siliconpolymeren aus dem Material des Reinigungsgerätes zu vermeiden; andernfalls käme es zu der o.g. nachteiligen Siliconkontamination der zu säubernden Oberfläche.

Das Ausbluten kann dadurch verhindert werden, dass ein Siliconpolymeren mit sehr hohem Molekulargewicht verwendet wird, z.B. ein UHMW-Polysiloxan (ultra-high molecular weight; beschrieben in K. J. Ryan et al.: Journal of Vinyl & Additive Technology, March 2000, Vol. 6, No. 1, p. 7-19).

Der Polymerisationsgrad von UHMW-Polysiloxanen liegt im Bereich von > 1000 bis zu ca. 14000, was zahlenmittleren Molekulargewichten zwischen 74 kg/mol 1000 kg/mol entspricht. Typische UHMW-Polysiloxane weisen eine dynamische Viskosität zwischen 10 kPa.s und 50 kPa.s auf, vorzugsweise zwischen 15 kPa.s und 30 kPa.s, vorzugsweise gemessen an einem luftgelagerten Rotationsrheometer nach DIN EN ISO 3219: 1994 und DIN 53019, wobei ein Platte-Platte-System (Durchmesser 25 mm) mit einem Messspalt von 0,5 mm verwendet wird. Die Messtemperatur beträgt 25,00°C +/- 0,1°C. Der Schergeschwindigkeitsgradient beträgt 0,1 sec⁻¹. Die Viskositätsangabe stellt den arithmetischen Mittelwert von drei unabhängig durchgeführten Einzelmessungen dar.

Aufgrund der großen Kettenlänge eines UHMW-Polysiloxans erfolgt eine physikalische Verschlaufung mit den Polymerketten des Reinigungsmaterials, die ein Ausbluten unterbindet. Überraschenderweise stellt man dennoch fest, dass die triboelektrischen Eigenschaften eines auf diese Weise mit sehr geringen Gehalten an Silicon additivierten Materials nahezu denen eines reinen Siliconpolymeren entsprechen, hingegen die übrigen Eigenschaften (insbesondere dessen Gleitreibungswiderstand) praktisch nicht verändert werden. Das Ausbluten des Siliconpolymeren wird auch verhindert, wenn das Material M Silicon-Blockcopolymere enthält, insbesondere bei denen der Nichtsiliconblock mit dem Material M kompatibel ist. Beispielsweise könnte im Fall einer Polyesterfaser als Material M eine Additivierung mit einem Polysiloxan-Polyester-Blockcopolymer erfolgen.

Eine dritte Möglichkeit das Ausbluten des Siliconpolymeren zu verhindern besteht in einer kovalenten Anbindung des Siliconpolymeren an die Polymerketten des Materials M. Beispielsweise kann ein mit Vinylgruppen oder (Meth)Acrylgruppen funktionalisiertes Siliconpolymer radikalisch an organische Polymere gebunden werden. Weitere zur kovalenten Anbindung nutzbare Reaktionen sind Hydrosilylierung, Kondensation, Thiol-En-Reaktion, Azid-Alkin-Cycloaddition, anionische oder kationische Polymerisation, Michael-Addition etc. Die Fixierung des Silicons im Reinigungsmaterial kann auch durch Verwendung einer vernetzbaren Siliconkautschukmasse erfolgen, die z.B. in einem thermoplastischen Material dispergiert und unter Scherung in der Hitze zu einem thermoplastischen Siliconvulkanisat vernetzt wird.

Erfindungsgemäß kostengünstig und effektiv, ist die Verwendung hochmolekularer Polydimethylsiloxane, deren dynamische Viskosität zwischen 1 kPa.s und 50 kPa.s, vorzugsweise zwischen 10 und 40 kPa.s, besonders bevorzugt zwischen 15 und 30 kPa.s liegt (vorzugsweise gemessen nach voranstehend beschriebener Methode).

Die Siliconpolymere sind als gebrauchsfertige Pellets/Granulate oder Masterbatche kommerziell erhältlich und können z.B. einem thermoplastischen Kunststoffgranulat vor dessen Weiterverarbeitung zugemischt werden.

Dem Fachmann ist klar, dass je nach Reinigungsmaterial und dessen Verarbeitungs- und Herstellungsbedingungen geeignete Silicon-Additivierungsverfahren ausgewählt werden müssen.

Der gewünschte triboelektrische Effekt wird erfindungsgemäß durch sehr niedrige Gehalte des Materials M an Siliconpolymer erzielt. Wie in den Beispielen gezeigt wird, können Gehalte an Siliconpolymer im Sub-Prozentbereich durchaus ausreichend sein. Je nach elektrostatischer Aufladungstendenz des Reinigungsmaterials können sich höhere Gehalte im einstelligen Prozentbereich erforderlich machen. Vorzugsweise wird nur so viel Silicon additiviert, wie für die sichere Erzielung des Effektes notwendig ist. Wie in den Beispielen gezeigt wird, führt eine weitere Erhöhung des Silicongehaltes über einen bestimmten Gehalt hinaus nicht zu einer weiteren Erhöhung der Aufladungstendenz des Reinigungsmaterials. Der Gehalt an Siliconpolymer im Material M sollte jedoch mindestens 0,0001 Gew.-%, vorzugsweise mindestens 0,01 Gew.-%, besonders bevorzugt mindestens 0,1 Gew.-% und in jedem Fall kleiner 10 Gew.-%, vorzugsweise kleiner 5 Gew.-% und besonders bevorzugt kleiner 2 Gew.-% betragen.

### Beispiele

### Konditionierung und Messung der elektrostatischen Aufladung

Die triboelektrische Aufladung wurde anhand der elektrischen Feldstärke (gemessen in kV/inch) charakterisiert. Hierzu wurden jeweils 2 mm dicke Kunststoffplatten mit den Abmessungen 80 mm x 120 mm hergestellt und vertikal so positioniert, dass deren Oberfläche einen Abstand von einem Feldstärkemessgerät von 1 inch betrug, wie vom Hersteller des Messgerätes empfohlen. Bei dem Messgerät handelt es sich um das Electrostatic Fieldmeter NILSTAT MODEL 775 der Firma ION SYSTEMS, Inc. Das Messgerät wurde der Empfehlung des Herstellers gemäß geerdet und auf eine Ausgangsfeldstärke von Null +/- 0,02 kV/inch justiert. Die Messungen der elektrischen Feldstärke erfolgten bei einer Raumtemperatur von 23°C und einer relativen Luftfeuchtigkeit von 48 %.

Die Kunststoffplatten wurden vor der Versuchsdurchführung mit Isopropanol gereinigt und am darauffolgenden Tag vermessen. Die Konditionierung (Entladung) der Kunststoffplatten erfolgte, indem diese mit einem Ionisierungsgebläse, welches positive und negative Ionen erzeugt und in einem Luftstrom nach außen leitet, sorgfältig neutralisiert wurden. Verwendet wurde das Gerät Sartorius Stat-Fan YIB01 der Firma SARTORIUS AG. Dieses ist in der Lage, Objekte in einem Arbeitsbereich von 600 x 600 mm zu neutralisieren. Die Kunststoffplatten wurden in einem Gebläseabstand von 10 cm innerhalb von 1 min bei mittlerer Gebläsedrehzahl neutralisiert.

Die triboelektrische Aufladung der Kunststoffplatten erfolgte mit Hilfe einer speziell für diesen Zweck konzipierten Zweiwalzen-Vorrichtung, welche es ermöglicht, die intrinsische triboelektrische Aufladungstendenz eines Materials weitgehend unabhängig von dessen Gleitreibungskoeffizienten (der sich von Material zu Material erheblich unterscheiden kann) zu bestimmen, was durch eine intensive Kontaktierung und anschließende Trennung erzielt wird. Die Zweiwalzen-Vorrichtung besteht aus zwei mit dem Reibmaterial (z.B. Microfasertuch) bespannbaren, im Messmodus sich berührenden Siliconschaumwalzen (Durchmesser 20 mm, Länge 15 cm), in welcher die Kunststoffplatten fünfmal hintereinander durch den Walzenspalt gezogen und danach unverzüglich vermessen werden. Die Druckkraft der auf die untere Walze drückenden oberen Walze wurde mittels Gewichten so justiert, dass die obere Walze mit einem Gesamtgewicht von 600 g, entsprechend einer Gewichtskraft von 5,886 N, im Messmodus auf die untere Walze drückt. Die untere Walze rotiert von einem Motor angetrieben mit einer Geschwindigkeit von 50 Umdrehungen/min., wodurch im Messmodus die in den Walzenspalt eingeführte Kunststoffplatte ein- und durchgezogen wird. Durch den gleichbleibenden Anpressdruck der beiden Walzen wurde eine vergleichbare und innige Kontaktierung von Kunststoffplatte und Reibmaterial erzielt, was sich letztlich in der guten Reproduzierbarkeit der gemessenen Feldstärken zeigte. Die am Metallgestell geerdete Zweiwalzenvorrichtung wurde kurz vor der Messung ebenfalls mit dem o.g. Ionisierungsgebläse neutralisiert. Es wurden jeweils insgesamt 5 Messungen je Kunstoff-Reibmaterial-Kombination durchgeführt und der Medianwert der Feldstärke ermittelt. Die Ergebnisse sind in Tabelle 3 angegeben.

### Herstellung der Kunststoffplatten

Für die Herstellung der Compounds und Kunststoffplatten wurden drei Basismaterialien verwendet. Compound 1: Polypropylen PP Moplen® EP200M, Dichte 0,9 g/cm³, MFR@230°C/2.16 kg = 8 g/10 min., Hersteller Fa. Basell Polyolefine GmbH, Frankfurt. Compounds 3-5: High-Density Polyethylen HDPE Lupolen® 5031 L, Dichte 0,952 g/cm³, MFR@190°C/2,16 kg = 6,5 g/10 min., Hersteller Fa. Basell Polyolefine GmbH, Frankfurt. Compound 6: Polybutylenterephthalat PBT Ultradur® B 4500, Dichte 1,3 g/cm³, MFR@250°C/2,16 kg = 19 g/10 min., Hersteller Fa. BASF SE, Ludwigshafen.

Sechs Compounds (Zusammensetzung und Herstellbedingungen gemäß Tabelle 1) wurden auf einem KraussMaffei Berstorff (Hannover, Deutschland) ZE 25 Doppelschneckenextruder hergestellt. Dazu wurden alle Bestandteile zu einem Dry-Blend gemischt und der Dry-Blend gravimetrisch in den Einzugsbereich des Extruders dosiert. Das resultierende Extrudat wurde in einem Wasserbad gekühlt und granuliert.

**Tabelle 1**

| Compound | 1 | 2 | 3 | 4 | 5 | 6 |
|---|---|---|---|---|---|---|
| Polymer | PP | PP/Talk Compound ¹) | HDPE | HDPE | HDPE | PBT |
| Gewichtsteil Polymer % | 99 | 97 | 99 | 97 | 95 | 99 |
| Gewichtsteil GENIOPLAST® Pellet S % | 1 | 3 | 1 | 3 | 5 | 1 |
| Gehalt an UHMW-Polysiloxan²) (Gew.-%) | 0,7 | 2,1 | 0,7 | 2,1 | 3,5 | 0,7 |
| Bedingungen für die Compoundierung | | | | | | |
| L/D | 47 | 47 | 47 | 47 | 47 | 47 |
| Temperatur °C | 190 | 190 | 195 | 195 | 195 | 270 |
| Schneckendrehzahl U/min | 300 | 400 | 300 | 300 | 300 | 350 |
| Durchsatz kg/h | 10 | 10 | 10 | 10 | 10 | 15 |

| | | | | | | |
|---|---|---|---|---|---|---|
| ¹) PP/Talk Compound: 67,2% Polypropylen Medium Impact Copolymer mit Schmelzindex 33g/10min (230°C/2,16kg) nach DIN ISO 1133 von SABIC Europe, Sittard, NL. 10,0% Polyolefin Elastomer mit Dichte 0.87 g/cm³, Schmelzindex 5g/10min (190°C/2,16kg) nach DIN ISO 1133 von Dow Chemical Company, Midland, MI, USA. 20,0% Talk JetFine® 3CA von Imerys, Paris, Frankreich. 2,0% Carbon Black Masterbatch PLASBLAK® LL2590 von Cabot Corporation, Boston, MA, USA. 0,2% Ca-Stearat 0,6% Antioxidant, UV-Stabilisator ²) UHMW-Polysiloxan: "Ultra-High Molecular Weight"-Polydimethylsiloxan | | | | | | |

### Herstellung von Spritzgussplatten (Kunststoffplatten)

Aus den so hergestellten Compounds 1-6 und den Referenzpolymeren (PP, HDPE, PBT) ohne Silikonadditiv wurden auf einer Engel ES 600/125 Spritzgussmaschine bei den in Tabelle 2 angegebenen Bedingungen Spritzgussplatten mit glatter Oberfläche und Dimensionen von 8 cm x 12 cm und einer Dicke von 2 mm hergestellt.

**Tabelle 2**

| Platte aus | Spritzgussbedingungen | | | |
|---|---|---|---|---|
| | Temperatur °C | Einspritzrate mm/s | Gegendruck bar | Haltedruck bar |
| PP | 250 | 120 | 180 | 25 |
| Compound 1 | 250 | 120 | 180 | 25 |
| PP/Talc Compound | 250 | 40 | 30 | 25 |
| Compound 2 | 250 | 40 | 30 | 25 |
| HDPE | 255 | 120 | 310 | 35 |
| Compound 3 | 255 | 120 | 310 | 35 |
| Compound 4 | 255 | 120 | 310 | 35 |
| Compound 5 | 255 | 120 | 310 | 35 |
| PBT | 260 | 120 | 220 | 34 |
| Compound 6 | 260 | 120 | 220 | 34 |

Zusätzlich zu den Kunststoffplatten wurde eine 2 mm dicke Folie aus Flüssigsiliconkautschuk hergestellt. Hierzu wurden die A- und B-Komponente des Flüssigsiliconkautschuks ELASTOSIL® LR 3003/50 (Wacker Chemie AG) im Massenverhältnis 1 : 1 auf einer Walze bei einer Temperatur der Walzen von 25°C während 15 Min. innig vermischt. Diese Mischung wurde anschließend in einer hydraulischen Presse bei einer Temperatur von 170°C während 15 Min. vernetzt. Die entformte 2 mm dicke Siliconelastomerfolie wurde einer 4 Stunden währenden Temperung bei 200°C in einem Umluft-Trockenschrank unterworfen.

### Zum Reiben der Kunststoffplatten verwendete Materialien

a) Microfasertuch "Microfasertuch PREMIUM Professional" der MOPPTEX GmbH (Österreich); Artikel Nr. 300565 blau.
b) Siliconfreies Baumwolltuch: Standard Baumwollgewebe, unangeschmutzt, Order Code: 10000, Name: 10A, 100% Baumwolle, Breite 100 cm, ca. 170 g/m², Fa. wfk Testgewebe GmbH, Brueggen (Deutschland).
c) Papier: Filterpapier der Fa. Schleicher & Schuell, Dassel (Deutschland), Rundfilter, ∅ 150mm, Ref.-Nr. 311812.

**Tabelle 3**

| Platte aus | Silicongehalt (Gew.-%) | Reibmaterial | | |
|---|---|---|---|---|
| | | Microfaser -tuch | Siliconfreies Baumwolltuch | Papier |
| | | Feldstärke (kV/inch) | | |
| PP *) | 0 | -3,1 | -4,2 | -4,0 |
| PP Compound 1 | 0,7 | -13,8 | -12,1 | -17,3 |
| PP/Talc *) | 0 | -4,0 | -6,6 | -13,9 |
| PP/Talc Compound | 2,1 | -8,3 | -10,7 | -17,1 |
| HDPE *) | 0 | -2,8 | -8,9 | -8,1 |
| HDPE Compound 3 | 0,7 | -12,7 | -13,5 | -13,9 |
| HDPE Compound 4 | 2,1 | -11,9 | -14,1 | -12,8 |
| HDPE Compound 5 | 3,5 | -10,4 | -13,2 | -12,0 |
| PBT *) | 0 | -8,3 | -7,4 | -2,9 |
| PBT Compound 6 | 0,7 | -14,2 | -12,6 | -13,7 |
| ELASTOSIL® LR 3003/50*) | 100 | -12,6 | -13,5 | -13,9 |

| | | | | |
|---|---|---|---|---|
| *) nicht erfindungsgemäß | | | | |

Wie aus Tabelle 3 ersichtlich, bewirkt bereits ein Silicongehalt von weniger 1 Gew.-% eine drastische Erhöhung der Feldstärke, was einer stärkeren elektrostatischen Aufladung des Kunststoffs infolge Reibung entspricht. Die HDPE-Beispiele belegen, dass durch wesentlich höhere Silicongehalte keine Erhöhung der Aufladung mehr erfolgt; offenbar wird die mit Siliconen erzielbare maximale triboelektrische Aufladung bereits bei sehr niedrigen Silicongehalten erreicht. Dies belegt auch die elektrostatische Aufladung eines Flüssigsiliconelastomers (LR 3003/50), deren Höhe die der siliconhaltigen Kunststoffe nicht übersteigt.

## Patentansprüche

1. Verfahren zur Adsorption von Partikeln durch triboelektrische Aufladung, bei dem die Partikel an einem Material M adsorbiert werden, das organischen polymeren Stoff mit darin fein verteiltem Siliconpolymer enthält, wobei der Gehalt an Siliconpolymer im Material M mindestens 0,0001 Gew.-% und kleiner 10 Gew.-% beträgt und wobei als Siliconpolymer UHMW-Polysiloxan (ultra-high molecular weight) mit einer dynamischen Viskosität von 1 kPa.s bis 50 kPa.s bei 25 °C eingesetzt wird.

2. Verfahren nach nach dem vorangehenden Anspruch, bei dem der organische polymere Stoff ein organischer Kunststoff ist.

3. Verfahren nach Anspruch 2, bei dem der organische Kunststoff ausgewählt wird aus Polyolefin, Polyester, Polyamid, Polyimid, Polyamidimid, Polyphenylensulfid, Aramid, Polyacrylnitril, Polyacrylnitril-Polymethacrylat-Copolymer, Polyacrylnitril-Polyvinylchlorid-Copolymer, Polyvinylchlorid, Polytetrafluorethylen und Polyurethan.

4. Verfahren nach einem oder mehreren der vorangehenden Ansprüche, bei dem als Siliconpolymer lineares Polydiorganosiloxan eingesetzt wird.

5. Verfahren nach einem oder mehreren der vorangehenden Ansprüche, bei dem die mittlere Teilchengröße der im Material M feinverteilten Siliconpolymere kleiner 10 µm beträgt.

6. Reinigungsgerät zur Adsorption von Partikeln durch triboelektrische Aufladung, enthaltend Material M, das organischen polymeren Stoff mit darin fein verteiltem Siliconpolymer enthält, wobei der Gehalt an Siliconpolymer im Material M mindestens 0,0001 Gew.-% und kleiner 10 Gew.-% beträgt und wobei als Siliconpolymer UHMW-Polysiloxan (ultra-high molecular weight) mit einer dynamischen Viskosität von 1 kPa.s bis 50 kPa.s bei 25 °C eingesetzt wird.

## Claims

1. Method for adsorption of particles by triboelectric charging, in which the particles are adsorbed on a material M, which contains organic polymeric material with silicone polymer finely distributed therein, wherein the content of silicone polymer in the material M is at least 0.0001 wt.% and less than 10 wt.% and wherein UHMW polysiloxane (ultra-high molecular weight) with a dynamic viscosity from 1 kPa.s to 50 kPa.s at 25°C is used as the silicone polymer.

2. Method according to the previous claim, in which the organic polymeric material is an organic plastic.

3. Method according to Claim 2, in which the organic plastic is selected from polyolefin, polyester, polyamide, polyimide, polyamide imide, polyphenylene sulfide, aramide, polyacrylonitrile, polyacrylonitrile polymethacrylate copolymer, polyacrylonitrile polyvinyl chloride copolymer, polyvinyl chloride, polytetrafluoroethylene and polyurethane.

4. Method according to one or more of the previous claims, in which linear polydiorganosiloxane is used as the silicone polymer.

5. Method according to one or more of the previous claims, in which the average particle size of the silicone polymer finely distributed in the material M is less than 10 µm.

6. Cleaning device, for adsorption of particles by triboelectric charging, containing material M, which contains organic polymeric material with silicone polymer finely distributed therein, wherein the content of silicone polymer in the material M is at least 0.0001 wt.% and less than 10 wt.% and wherein UHMW polysiloxane (ultra-high molecular weight) with a dynamic viscosity from 1 kPa.s to 50 kPa.s at 25°C is used as the silicone polymer.

## Revendications

1. Procédé d'adsorption de particules par chargement triboélectrique, selon lequel les particules sont adsorbées sur un matériau M, qui contient une matière polymère organique dans laquelle un polymère de silicone est finement réparti, la teneur en polymère de silicone dans le matériau M étant d'au moins 0,0001 % en poids et de moins de 10 % en poids, et un polysiloxane UHMW (ultra-high molecular weight) ayant une viscosité dynamique de 1 kPa·s à 50 kPa·s à 25 °C étant utilisé en tant que polymère de silicone.

2. Procédé selon la revendication précédente, selon lequel la matière polymère organique est une matière plastique organique.

3. Procédé selon la revendication 2, selon lequel la matière plastique organique est choisie parmi une polyoléfine, un polyester, un polyamide, un polyimide, un polyamide-imide, un polysulfure de phénylène, un aramide, un polyacrylonitrile, un copolymère de polyacrylonitrile-polyméthacrylate, un copolymère de polyacrylonitrile-polychlorure de vinyle, un polychlorure de vinyle, un polytétrafluoroéthylène et un polyuréthane.

4. Procédé selon une ou plusieurs des revendications précédentes, selon lequel un polydiorganosiloxane linéaire est utilisé en tant que polymère de silicone.

5. Procédé selon une ou plusieurs des revendications précédentes, selon lequel la taille de particule moyenne des polymères de silicone finement répartis dans le matériau M est inférieure à 10 µm.

6. Appareil de purification, destiné à l'adsorption de particules par chargement triboélectrique, contenant un matériau M, qui contient une matière polymère organique dans laquelle un polymère de silicone est finement réparti, la teneur en polymère de silicone dans le matériau M étant d'au moins 0,0001 % en poids et de moins de 10 % en poids, et un polysiloxane UHMW (ultra-high molecular weight) ayant une viscosité dynamique de 1 kPa·s à 50 kPa·s à 25 °C étant utilisé en tant que polymère de silicone.
